(19) Europäisches Patentamt
European Patent Office
Office européen des brevets

(11) **EP 3 270 334 A1**

(12) **EUROPEAN PATENT APPLICATION**

(43) Date of publication:
**17.01.2018 Bulletin 2018/03**

(51) Int Cl.:
**G06Q 10/04** *(2012.01)*  **G06Q 10/06** *(2012.01)*
**G06Q 30/02** *(2012.01)*  **G06Q 10/02** *(2012.01)*

(21) Application number: **17180046.9**

(22) Date of filing: **06.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.07.2016 US 201615207079**

(71) Applicant: **Conduent Business Services LLC Dallas, TX 75204 (US)**

(72) Inventors:
• **Chehreghani, Morteza Haghir**
  **38240 Meylan (FR)**
• **Chen, Yuxin**
  **8092 Zurich (CH)**

(74) Representative: **Gill Jennings & Every LLP**
  **The Broadgate Tower**
  **20 Primrose Street**
  **London EC2A 2ES (GB)**

(54) **METHOD OF TRIP PREDICTION BY LEVERAGING TRIP HISTORIES FROM NEIGHBORING USERS**

(57) A method and system for generating a trip prediction specific to a given user includes acquiring (S204) a first dataset of trip histories taken in a given transportation network; dividing (S208) a trip history of a given user at a specific time point into user training and validation datasets; acquiring training datasets each associated with candidate neighboring users; identifying (S226) useful neighbors from the training and validation datasets; combining (S232) the user trip history and the trip history of each useful neighbor; applying a similarity function to the combined dataset, wherein a sum of similarities between a given trip and all other trips in the combined dataset is computed; associating a trip having the highest weighted similarity (weighted by frequency) with a prediction for a future trip; and outputting the prediction to an associated user device.

FIG. 2A

**Description**

BACKGROUND

The present disclosure relates to a system and method for generating a trip prediction by analyzing a user's previous/historical trips. The system augments the user's trip histories by identifying and adding similar trips made by other users. The disclosure is also amenable to public transportation management, where individuals' trip behaviors can be used for simulating the public transporation system. Although, there is no limitation made herein to the application of the presently disclosed method.

There are known a number of trip simulation systems and approaches that base predictions-whether such predictions are specific to a user or to a network-on trip behavior of travelers in a designated transportation network. At the most basic level, an existing trip simulator can estimate the future trip of a single user based on an identified pattern in the user's trip history. However, individual histories are not always sufficient because a given user may not have taken enough trips at any point in time for making a prediction regarding a future trip. For example, if the system is looking at a given user's trip behavior at a specific hour for a specific day of the week, such as 3:00pm on Wednesdays for example, to estimate that user's travel behavior on a future Wednesday at the same time, the user's trip history may not evidence very stable trip behavior. The user's trips at the designated time can be sparse, or there can be numerous trips taken at that time where the origins and/or destinations fluctuate. An isolated, one-time trip can also frustrate a prediction. Therefore, a larger pool of data used to generate the prediction is needed. A personalized trip recommendation is desired which can predict an individual's trip from the behavior of other travelers in a transportation network. However, the data filling the pool needs to be similar to, or relevant to, the user's history for the prediction to be accurate. Therefore, there is desired an approach that enables the system to identify neighboring users having a similar trips history and for discarding from consideration the neighboring users that have dissimilar trips history.

BRIEF DESCRIPTION

One embodiment of the disclosure relates to a method for predicting trips specific to a given user. The method includes acquiring a first dataset of trip histories taken in a given transportation network. The method includes dividing a trip history of a given user at a specific time (entity $<u, t>$) into a training dataset and a validation dataset. The method includes acquiring training datasets each associated with candidate neighboring users. The method includes identifying useful neighbors from the training and validation datasets. The method includes combining the user trip history and the trip history of each useful neighbor. The method includes applying a similarity function to the combined dataset, wherein a sum of weighted similarities between a given trip and all other trips in the combined dataset is computed. The method includes associating a trip having the highest similarity (related to a lowest distance) with a prediction for a future trip. The method includes outputting the prediction to an associated user device.

Another embodiment of the disclosure relates to a system for predicting trips specific to a given user. The system includes a computer programed to perform a method for a classification of candidate object associations. The computer is programmed to perform the operations of acquiring a first dataset of trip histories taken in a given transportation network; dividing a trip history of a given user into a training dataset and a validation dataset; acquiring training datasets each associated with candidate neighboring users; identifying useful neighbors from the training and validation datasets; combining the user trip history and the trip history of each useful neighbor; applying a similarity function to the combined dataset, wherein a sum of weighted similarities between a given trip and all other trips in the combined dataset is computed; associating a trip having the highest weighted similarity with a prediction for a future trip; and outputting the prediction to an associated user device.

BRIEF DESCRIPTION OF THE DRAWINGS

FIGURE 1 shows a computer-implemented system for generating a trip prediction by leveraging trip histories from different users.
FIGURES 2*A*-2*B* illustrate an exemplary method which may be performed with the system of FIGURE 1.
FIGURES 3*A*-3*G* shows plots of the estimation error computed for an illustrative dataset where the neighbors are selected according to *all2all* and *ordered* results.
FIGURES 4*A*-4*D* shows plots of the estimation error computed for the illustrative dataset when the neighbors are selected according to an *ordered* embodiment.
FIGURES 5*A*-5*B* shows plots of the estimation error computed for an illustrative dataset of entities with and without non-negative matrix factorization.

FIGURE 6 shows plots of the estimation error computed for an illustrative dataset when different number of entities with short histories $L = 2$ are augmented with 2000 entities with long histories $L = 8$.

FIGURES 7A-7B show plots of the estimation error computed for an illustrative dataset with combined trips of different history lengths.

FIGURE 8 shows example trips in a public transportation network, where the stops locations are mapped from Spherical coordinates into Cartesian coordinates.

FIGURE 9 illustrates trips taken by users at some fixed time slots.

FIGURE 10 illustrates datasets of a user $<u,t>$ and neighboring $<u',t>$ entities divided into training and validation sets.

DETAILED DESCRIPTION

The present disclosure relates to a system and method for generation a trip prediction by analyzing a user's trip histories. The system augments the user's trip histories by identifying and adding similar trips made by other users, which can be informative and useful for predicting the future trips of a given user. This also helps to cope with noisy or sparse trip histories, where the self-history by themselves do not provide a reliable prediction of future trips.

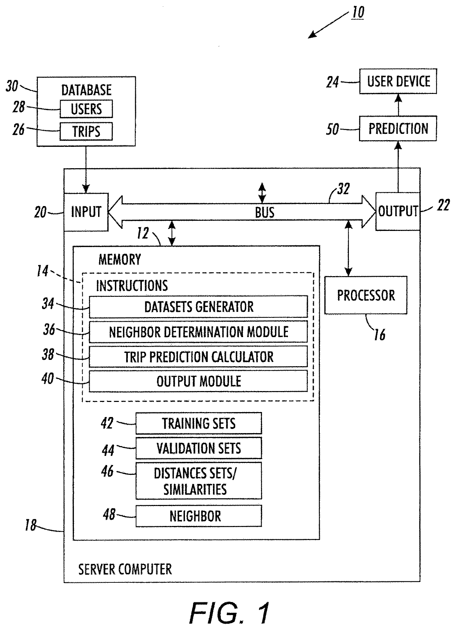

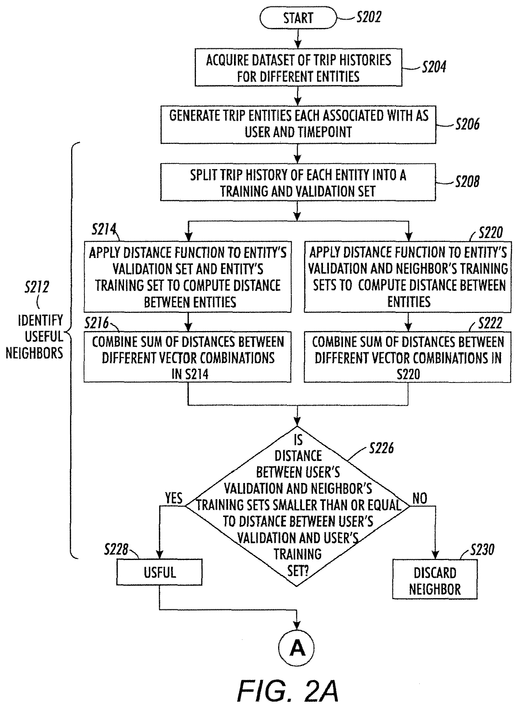

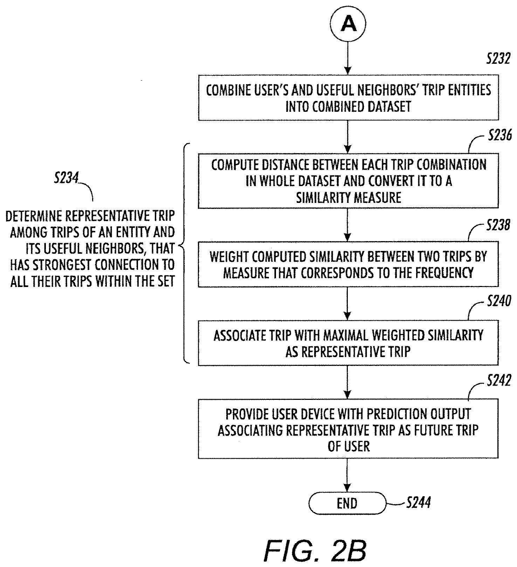

With reference to FIGURE 1, a computer-implemented system 10 for generating a trip prediction by leveraging trip histories from different users. The system 10 includes memory 12 which stores instructions 14 for performing the method illustrated in FIGURE 2 and a processor 16 in communication with the memory for executing the instructions. The system 10 may include one or more computing devices, such as the illustrated server computer 18. One or more input/output devices 20, 22 allow the system to communicate with external devices, such as a user device 24 via wired or wireless links, such as a LAN or WAN, such as the Internet. In one embodiment, the server computer 18 receives a dataset of trip histories 26 taken from a transportation network 28. In one embodiment, this dataset can be built from or collected from the transactions of registered users 28 in the transportation network and stored in a database 30. Each trip 26 stored in the database 30 can include, as just one nonlimiting example, the origin and destination information and the date and time that the trip was taken. There is no limitation made herein with regard to how the trips are collected. In one embodiment, such as a public transportation network that issues registered users metro cards, the departure times can be collected when a passenger scans its ticket at a turnstile scanner, a bus (or vehicle scanner) or collected by any other mechanism used to validate and verify passage. Similarly, in transportation networks that include a second, different scanner at the arrival stop, the arrival information can be collected. In one embodiment, a transportation network can supply the trips information to the system 10 for processing. Hardware components 12, 16, 20, 22 of the system communicate via a data/control bus 32.

The illustrated instructions 1 include a datasets generator 34, a neighboring user ("neighbor") determination module 36, a trip prediction calculator 38, and an output module 40.

The datasets generation module 34 acquires a dataset of trip histories and separates the trips by time points, such that it considers each pair <user, time point> as an entity. Then, for each entity, it divides the user's trips into training and validation sets 42, 44 using the user's trips; determines the useful neighbors using the training and validation sets of different users.

The neighbor determination module 36 searches for useful neighbors by computing a distance function between the trips in the validation set of an entity and neighbor's training sets; summing the distances 46 to generate a first summed distance; computing a distance function between the trips in the user's training and validation sets; summing the distances 46 to generate a second summed distance; comparing the first summed distance to the second summed distance; and associating a neighbor as being a useful neighbor 48 for a prediction if the first summed distance is less than or equal to the second summed distance.

The trip prediction calculator 38 computes a representative trip, for each entity (i.e., a (user, time point) tuple), among all trips from a combined dataset of all distinct trips among the entity's and useful neighbors'; for each of the trips, computes similarity 46 for the given trip and all other trips in the combined dataset; for the each trip, sums the similarities computed for the trip; weights the summed similarities of all trips by a measure associated with the frequency of the trip in the dataset; and associates the highest weighted similarity as being the best estimate of a future trip-rendering it as the prediction 50.

The output module 40 provides the prediction to a user device.

The computer system 10 may include one or more computing devices 18, such as a PC, such as a desktop, a laptop, palmtop computer, portable digital assistant (PDA), server computer, cellular telephone, tablet computer, pager, trip collection device, such as a ticket scanner (not shown), combinations thereof, or other computing device capable of executing the instructions for performing the exemplary method.

The memory 12 may represent any type of non-transitory computer readable medium such as random access memory (RAM), read only memory (ROM), magnetic disk or tape, optical disk, flash memory, or holographic memory. In one embodiment, the memory 12 comprises a combination of a random access memory and read only memory. In some embodiments, the processor 16 and memory 12 may be combined in a single chip. Memory 12 stores instructions for performing the exemplary method as well as the processed data.

The network interface 20, 22 allows the computer to communicate with other devices via a computer network, such as a local area network (LAN) or wide area network (WAN), or the internet, and may comprise a modulator/demodulator (MODEM), a router, a cable, and/or Ethernet port.

The digital processor device 16 can be variously embodied, such as by a single-core processor, a dual-core processor (or more generally by a multiple-core processor), a digital processor and cooperating math coprocessor, a digital controller, or the like. The digital processor 16, in addition to executing instructions 14 may also control the operation of the computer 18.

The term "software," as used herein, is intended to encompass any collection or set of instructions executable by a computer or other digital system so as to configure the computer or other digital system to perform the task that is the intent of the software. The term "software" as used herein is intended to encompass such instructions stored in storage medium such as RAM, a hard disk, optical disk, or so forth, and is also intended to encompass so-called "firmware" that is software stored on a ROM or so forth. Such software may be organized in various ways, and may include software components organized as libraries, Internet-based programs stored on a remote server or so forth, source code, interpretive code, object code, directly executable code, and so forth. It is contemplated that the software may invoke system-level code or calls to other software residing on a server or other location to perform certain functions.

FIGURES 2*A* and 2*B* demonstrate a flowchart showing a method of trip prediction by leveraging trip histories from neighboring users. The method starts at S202. The disclosure enriches the trip history of a user *u* at time *t* with the trip history of another user *u'* at time t' (hereinafter "neighbor <*u', t'*>") to generate a prediction. Mainly, for the user having a history of exhibiting certain trip behaviors, the system determines similar trip behaviors exhibited by other people at the same or different time points. The system uses these similar histories to generate a prediction for the user.

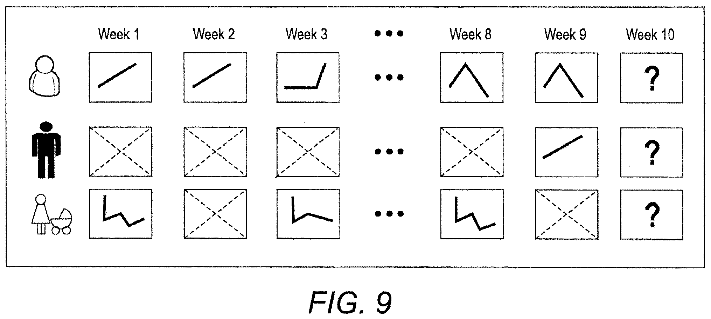

By this, the system acquires a dataset of trip histories for different entities at S204. An "entity <*u,t*>" as defined herein means a user *u* and time *t.* During a preprocessing step, every user can be registered with the system and can be associated with a user identification. Using the identification, an individual log of the user's trips can be observed and recorded over time to create a dataset of trip histories for that user. There is no limitation made herein to the method used to collect the trip information. Similar datasets are generated for other registered users of the system. FIGURE 9 is an illustration describing sample trips taken by three different users at fixed time slots. The trip histories include trips taken at the same time slots (e.g., 8:00am-9:00am on Mondays) over nine weeks. The trip trajectories are represented as line segments corresponding to each slot, and the disclosed system aims to predict the trips for each of the users at a given time slot (e.g., 8:00am-9:00am on the Monday) of the tenth week.

For each entity, the datasets generator 34 divides a time (such as, a day of the week and/or an hour of a day) into time points (such as, for example, the time *t* over multiple weeks, or months, etc.). At S206, the system generates a number of entities each associated with a user and a different time point. For each entity, a set of trip histories is associated. A trip is specified by origin O and destination D information, although there is no limitation made herein to how the origin and destination information is defined. In the illustrative embodiment, the dataset for entity <*u,t*> is divided into a number of time points across a predetermined duration and the origin and destination information-defined by a pair of coordinates $\begin{bmatrix} X_1, Y_1: & O \\ X_2, Y_2: & D \end{bmatrix}$ — is assigned to each time point. In simpler terms, all trips taken at the specified time are described for their respective time points.

In the illustrative example shown in Table 1, the user has an observed history of trips (or trip behavior) at 9:00am on Fridays over the course of multiple weeks. In other words, the system has acquired the trip histories for the user at these time points between 9am and 10am, although there is no limitation made herein to the time segment. The illustrative trip is that taken in a one-hour time segment, but the time segment can include every half hour, quarter hour, tenth hour, and so on. Each trip is represented by the origin and destination coordinate information in a cell associated with the time point. This table including the cells is for illustrative purposes only. The system aims to predict, for example, the future trip behavior for an upcoming Friday, July 8, which can be similar behavior.

Table 1

| | Training Set | | | | Validation Set | | | | Prediction |
|---|---|---|---|---|---|---|---|---|---|
| | 1-Jan | 8-Jan | 15-Jan | 22-Jan | 19-Jan | 4-Feb | 11-Feb | 18-Feb | 8-Jul |
| user<*u,t*> Fridays at 9:00am | $(X_1,Y_1)$ $(X_2,Y_2)$ | | | | | | | | |

(continued)

|  | 29-Dec | 5-Jan | 12-Jan | 19-Jan |  |  |  |  |  |
|---|---|---|---|---|---|---|---|---|---|
| neighbor<$u',t'$> | $(X'_1,Y'_1)$ |  |  |  |  |  |  |  |  |
| Tuesdays at 3:00pm | $(X'_2,Y'_2)$ |  |  |  |  |  |  |  |  |

Next, the system searches for useful neighbors. To perform this task, the datasets generator 34 splits the trip entities associated with each entity into a training set $T_{ut}^{trn}$ and a validation set $T_{ut}^{vld}$ at S208.

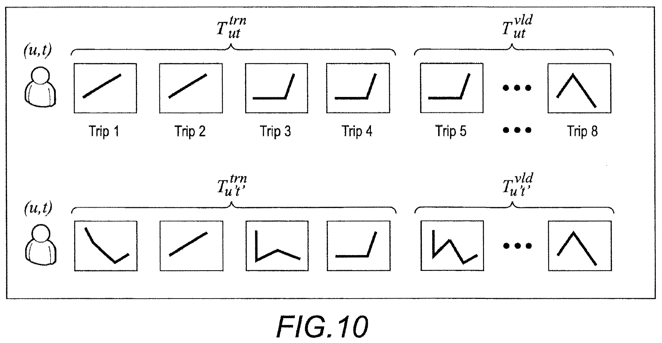

For illustrative purposes, the training datasets are defined by the earlier four trips in Table 1, above, for the user and the neighbor entities, and the validation dataset is defined by the later trips in Table 1. In the contemplated embodiment, the training and validation sets have equal entities. Should there be an odd number of trips in the dataset, then the odd-numbered entity can be discarded or can be associated with its corresponding training set. The validation set $T_{ut}^{vld}$ is treated as a temporary target. A neighbor entity is determined as being useful if its computed distance to the user's validation amount is not greater than the computed distance between the user's training and validation sets. Therefore, the system acquires the dataset of trip histories for a different entity ("neighbor <$u',t'$>") here or uses histories acquired at S204. Each entity is associated with a neighbor $u'$ at time $t'$, which can be the same or different than the user's time $t$, and same time point. In the sample table used as an illustrative example, the time is Tuesdays at 3:00, and across a time point of multiple weeks. Similar to the operation described for the user, the trips are defined by origin and destination information. Also, the trip histories are split into two sets, where the first set is also labeled as a training set to be used in further processing, and the second (validation set) is ignored (See, FIGURE 10). FIGURE 10 shows an illustration of this concept, where the datasets of a user entity <$u,t$> and a neighboring entity <$u',t'$> are divided into training and validation datasets, where each set contains a fraction of the trips for each entity.

Essentially, the system identifies useful neighbors at S212 by determining if the neighbor's training set is more similar to the entity's validation set than the entity's training set. To perform this task, the neighbor determination module 36 applies a distance function to trip entities of the user's validation set and the user's training set at S214. Therefore, the first element/trip of the user's validation set (e.g., 19-Jan) is compared against the first element/trip of the user's training set (*e.g.*, 1-Jan), and so forth. The system treats each element (trip) as a vector in a four-dimensional space and computes the distance between the entity's validation and training vectors. In one embodiment, the distance function is applied to corresponding entities in the user validation set and the user training set. In a different embodiment, the distance function is applied to every combination of entities in the user validation set and the user training set. Regardless of the selected embodiment, the distances between the different vector combinations are combined to compute a first distance at S216.

To generate a second distance, the neighbor determination module 36 applies a distance function to the user validation dataset and the neighbor(s) training dataset(s) at S218. Therefore, the first element/trip of the user's validation set (*e.g.*, 19-Jan) is compared against the first element/trip of the neighbor's training set (*e.g.*, 29-Dec), and so forth. In one embodiment, the distance function is applied to corresponding entities in the user validation set and the neighbor's training set. In a different embodiment, the distance function is applied to every combination of entities in the user validation set and the neighbor's training set. However, the embodiment-i.e., corresponding entities verses every combination of entities-is determined based on the embodiment selected to compute the distance in S214-S216. Regardless of the selected embodiment, the distances between the different vector combinations are combined to compute a second distance at S220.

Continuing with FIGURE 2, at S226, the distance between the user's validation and training sets ("first distance") is compared to the distance between the user's validation and the neighbor's training set ("second distance"). In response to the second distance being smaller than or equal to the first distance (YES at S226), the neighbor is associated as being a useful neighbor for the purpose of prediction at S228. In response to the second distance being greater than the first distance (NO at S226), the neighbor is associated as not being a useful neighbor for the purpose of prediction, and is ignored for further processing at S230.

Once the neighbors are identified, the neighbors' trip histories and the user's trip history are used for estimating a user trip for the future date. (*See*, FIG. 2*B*). To perform the prediction, the system computes a representative trip. In other words, each of the user's and determined neighbor's datasets include multiple trips (eight (8) in the illustrative sample Table 1), but the system wants to select one representative trip among all the trips. First, the trip prediction calculator 38 combines the user's and the neighbor's trips into one dataset of all relevant trips taken in the network ("whole dataset") at S232. In an embodiment where multiple neighbors' (or entities') trip histories are being considered, the system combines all the neighbors' trip entities with the user's and still computes a single representative trip. Next, the trip prediction calculator 38 computes a trip among the user's entities that has the strongest connection to all of the other trips at S234. In the contemplated embodiment, the representative trip can be selected according to its strong similarity to other trips. In another embodiment, the single representative trip can include the trip that appears most frequently in the whole set. The most frequent trip (which includes an origin-destination pair) is stored for later processing.

By determining the frequency of trips taken, each trip (origin-destination pair) is identified. Next, the trip prediction calculator 38 computes a distance between the each two trips in the whole dataset at S236. Because the frequencies of trips are known, duplicate computations need not be performed for a trip that was taken more than once by a registered user. The distance is computed in the same manner set forth above for the training and validation sets. Mainly, the computed distance between two trips is weighted by a measure that corresponds to the frequency at S238. In this manner, the trip prediction calculator 38 can adjust the distance of each trip to all other trips. The distance is then converted into a similarity measure via negation and shift. The trip with the maximal similarity is associated as being the representative trip at S240. The system generates a prediction associating the representative trip as the future trip, and the output module 40 provides the prediction to the user device at S242. The method ends at S244.

The method illustrated in FIGURE 2 may be implemented in a computer program product that may be executed on a computer. The computer program product may comprise a non-transitory computer-readable recording medium on which a control program is recorded (stored), such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other non-transitory medium from which a computer can read and use. The computer program product may be integral with the computer 18, (for example, an internal hard drive of RAM), or may be separate (for example, an external hard drive operatively connected with the computer 18), or may be separate and accessed via a digital data network such as a local area network (LAN) or the Internet (for example, as a redundant array of inexpensive or independent disks (RAID) or other network server storage that is indirectly accessed by the computer 18, via a digital network).

Alternatively, the method may be implemented in transitory media, such as a transmittable carrier wave in which the control program is embodied as a data signal using transmission media, such as acoustic or light waves, such as those generated during radio wave and infrared data communications, and the like.

The exemplary method may be implemented on one or more general purpose computers, special purpose computer(s), a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA, Graphical card CPU (GPU), or PAL, or the like. In general, any device, capable of implementing a finite state machine that is in turn capable of implementing the flowchart shown in FIGURE 2, can be used to implement the method. As will be appreciated, while the steps of the method may be computer implemented, in some embodiments one or more of the steps may be at least partially performed manually. As will also be appreciated, the steps of the method need not all proceed in the order illustrated and fewer, more, or different steps may be performed.

Further details on the system and method will now be provided.

The Neighbor-Based Trip Prediction Approach

The disclosure aims to predict a user's future trip base on a history of the user's trips and other users' (in the network) trips. However, a user's trip histories might be sparse or noisy and may not be sufficient to provide a suitable trip prediction. Therefore, the disclosure augments the user's histories with the trip histories of other users ("neighbors" in order to compute a more robust estimation.

However, to take all other user trip histories into account, i.e. averaging over all trips of all users in the system, is not valuable because different people might have different trip preferences than the user (which could make the prediction less accurate) and thus global averaging discards such a diversity. Therefore, for each user, the disclosure identifies a set of appropriate other histories (i.e. neighbors) which help to improve future trip prediction.

To perform the disclosed method, two considerations are taken into account. First, the users usually make a diverse set of trips during a day. Therefore, a day is divided into small (e.g., one-hour) time intervals and the trips being considered are those taken inside this interval. The time interval is treated as a unit of trip behavior; however, the disclosure is amenable to other time units (years, weeks, months, hours) divided into larger or smaller time intervals (months, days, weeks, minutes, etc.) as well.

On the other hand, the trip behavior of user $u$ at time $t$ might be similar to the trip behavior of user $v$ at a different time $t'$ such that $t$ and $t'$ does not necessary overlap. For example, user $u$ might travel to the city university at time 9:00, whereas user $v$ might take this trip at time 15:00. Therefore, when querying a trip as well as finding appropriate auxiliary trip histories, the operations are parametrized by time point $t$.

The base entities are the pairs $<u,t>$, where $T_{ut}$ refers to the set of trips of entity $<u,t>$. Then, the question becomes for a specific entity $<u,t>$ which represents user $u$ at time $t$, what are the other entities that can be used to obtain a better prediction for the next trip of the user?

Another consideration taken into account is that usefulness of neighboring users are not symmetric. That is, a neighboring entity *<u',t'>* might be helpful for the user entity *<u,t>* to find a better trip in future, but the reverse may not be true should the neighboring entity *<u',t'>* consider the user entity *<u,t>* for the same purpose. In particular, such a unidirectional relation can hold whenever the trip history of the neighboring entity *< u', t' >* is clean and long enough, but the history of the user entity *<u,t>* is very short or noisy. Thus, the methods that work based on grouping or clustering of entities discard this kind of asymmetric relations.

Therefore, the present disclosure proposes a method to compute additional helpful entities to each specific entity. One aspect of the present disclosure is that it does not require access to the user profiles. Instead, the disclosure uses only trip histories to define a proper time-dependent distance/similarity measure between a user and neighbors. In absence of user profile information, the disclosure relies on the fundamental principle of learning theory. This leads to much more efficient and faster operation of the system since access to user profiles is not required while maintaining confidentiality of these profiles.

Hence, the disclosure learns the neighbors in a non-parametric way using a separate unseen dataset, referred to herein as the "validation set". Given a dataset of cantoning $L$ trips for each entity, i.e. D = $\{T_{ut}\}$, the system divides the trips forming whole dataset into two subsets, the train set $\{T_{ut}^{trn}\}$ and the validation set $\{T_{ut}^{vld}\}$. Each of the training and validation sets include $L/2$ trips (per entity). Then, the validation set is used to identify the appropriate neighbors of the entities. To compute the appropriate neighbors of the user entity *<u,t>*, the system investigates which of the train histories of candidate neighboring entities are at least equally similar to the user's validation history compared with the user's train history. The system performs this determination by applying a distance function using the equation:

$$\mathcal{N}_{ut} = \{< u',t' >: dist(T_{u't'}^{trn}, T_{ut}^{vld}) \leq dist(T_{ut}^{trn}, T_{ut}^{vld})\} \quad (0)$$

In a first embodiment, an ordered approach is performed for computing the distance function. Only the trips at the same positions are compared in the user's and the neighbor's training sets using the equation:

$$dist(p,q) = \frac{2}{L}\sum_{1 \leq i \leq L/2} seuc(p_i, q_i), \quad (0)$$

where $p_i$ indicates the $i^{th}$ trip in trip history $p$ and $seuc(p_i, q_i)$ gives the squared Euclidean distance between trips $p_i$ and $q_i$. This embodiment corresponds to the "odered" measure as previously discussed, and requires $p$ and $q$ to have the same number of trips.

The trips in the trip histories are sorted according to their time of realization, and $p_i$ (resp. $q_i$) indicates the $i^{th}$ trip in trip history $p$ (resp. $q$). Further, $(p_i, q_i)$ gives the squared Euclidean distance between trips $p_i$ and $q_i$. Specifically, for two single-leg trips $p_i := (o_1, d_1, v)$ and $q_i := (o_2, d_2, v)$ where $v = \emptyset$, the squared Euclidean distance is represented by the equation:

$$(p_i, q_i) = (\langle o_1, d_1, v \rangle, \langle o_2, d_2, v \rangle) = |o_1 - o_2|^2 + |d_1 - d_2|^2.$$

Note that this variant requires $p$ and $q$ to include the same number of trips.

In a second embodiment, an all-2-all approach is performed for computing the distance function. Each trip from one history (the user's validation set) is compared against all trips of the other history (the user's training set or the neighbor's training set) using the equation:

$$dist(p,q) = \frac{4}{L^2}\sum_{1 \leq i \leq L/2} \quad \sum_{1 \leq j \leq L/2} seuc(p_i, q_j). \quad (0)$$

One advantage of *all2all* embodiment over the *ordered* embodiment is that $p$ and $q$ do not need to have necessarily the same number of trips. Thus, *all2all* is more general-purpose.

In the next step, the members of the neighbor set $\mathcal{N}_{\imath\,ut}$ are employed to predict a future trip for the user entity *<u,t>*. For this purpose, the total trip histories of all neighbors are collected in $\mathcal{N}_{\imath\,ut}$ (i.e. including train and validations trips) and the representative trip(s) are computed as the trip(s) with maximal average similarity with other trips using the equation:

$$r_{ut} \in \arg \max_{x \in T(\mathcal{N}_{ut})} \sum_{y \in T(\mathcal{N}_{ut})} f_x \; sim(x,y), \quad (0)$$

where $T(\mathcal{N}_{ut})$ indicates the set of all trips of all entities in $\mathcal{N}_{ut}$; $f_x$ shows the frequency of trip $x$ in this set; and $sim(x,y)$ measures the pairwise similarity between the two trips $x$ and $y$, which is obtained by $const - seuc(x,y)$. The value $const$ is selected as the minimal value for which the pairwise similarities become nonnegative.

Finally, the next trip $r_{ut}$ of the given user is predicted. Note that the prediction $r_{ut}$ might include multiple trips. The Algorithm listed below summarizes the method:

---

**Algorithm 1** History-based trip prediction.

**Require:** The entities and the respective trips

**Ensure:** Predicted trip(s) to each entity.

1:  **for each** entity $\langle u,t \rangle$ **do**

2:  Split the trip histories into $T_{ut}^{trn}$ and $T_{ut}^{vld}$ for construction of the training and validation sets.

3:  **end for**

4:  **for each** entity $\langle u, t \rangle$ **do**

5:  $$\mathcal{N}_{ut} = \{ \langle u', t' \rangle : \mathrm{dist}(T_{u't'}^{trn}, T_{ut}^{vld}) \leq \mathrm{dist}(T_{ut}^{trn}, T_{ut}^{vld}) \}.$$

6:  $$r_{ut} \in \arg\max_{x \in T(\mathcal{N}_{ut})} \sum_{y \in T(\mathcal{N}_{ut})} f_x \; sim(x, y).$$

7:  **end for**

8:  **return** $\{r_{ut}\}$

---

One aspect of the present disclosure is that the output of the disclosed method can be further used in simulation, traffic analysis, and demand modeling and recommendations.

Another aspect of the present disclosure is improved accuracy of predictions. One defining factor for performance is the quality of trips' initial feature representations. As previously discussed, the performance of the predictor relies on the definition of the distance function dist(.,.), which currently is defined as a function of the (pairwise-) squared Euclidean distances between trips. However, the geographical information about a trip is more than just the origin and destination stop.

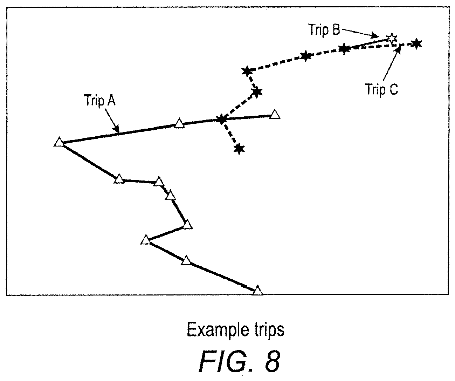

Taking, for example, a public transportation route, the distance between points can be scaled from real distance in Euclidean space. In FIGURE 8, three example trips are shown where the stops locations are mapped from Spherical coordinates into Cartesian coordinates. As demonstrated in FIGURE 8, straight line distance between (*O,D*) pairs hardly reflects the scales of the difference between different trips. In FIGURE 8, Trip *B* and Trip *C* represent the same service line in different hours of the day. They are almost identical except for the last stop. Trip *A* and *Trip B* (or *C*) are very different, although they still share a common stop which could be a popular transfer stop for 2-leg trips (i.e., some users travel on Trip *A* may transfer to *B* (or *C*) at the intersecting point). To capture such potentially useful information, the disclosure proposes a new distance measure between trips, *tripd*(.,.), defined as follows:

$$tripd(p_i, q_i) = \left(1 - \frac{p_i \cap q_i}{p_i \cup q_i}\right) * seuc(p_i, q_i) \quad (0)$$

where the first term on the R.H.S. represents the Jaccard distance between trip $p_i$ and $q_i$ if the trips are viewed as sets of intermediate stops. This heuristic captures the intuition that if two trips share many common stops, even though the ending stops are far apart, they can be treated as somewhat similar since they can belong to different segments of the same service line, or the two trips can be potential transfer trips for each other.

Because the disclosed method for proposing neighbors is orthogonal to the feature extraction/engineering component, the current features may be preprocessed by transferring them into more robust, noise-resilient features, via commonly used techniques such as non-negative matrix factorization or truncated SVD. One aspect of this black-box feature engineering component is that it may be useful if more complicated types of features or a combination of different criteria are used.

EXAMPLE 1:

Experiments were performed on the disclosed method using a dataset collected from a transportation network and prepared from e-card validation collection. Trip histories were queried with different lengths (number of trips), i.e. *L* = 2,3,4,6,8,10, to produce different dataset. Two thousand entities were collected from the database for each length, unless fewer entitise were available (e.g., for **L** = 10, only 740 entities were collected). For the *ordered* embodiment, which requires that the two trip histories in train and validation sets be aligned, the considered trips were of the same lengths.

TABLE 1

| TickedId | w-day | d-hour | y-day | o-longitude | o-latitude | d-longitude | d-latitude |
|---|---|---|---|---|---|---|---|
| tid000001 | 2 | 13 | 65 | 6.160129 | 48.698788 | 6.178392 | 48.693237 |
| tid000001 | 2 | 13 | 72 | 6.162016 | 48.698792 | 6.178392 | 48.693237 |
| tid000001 | 2 | 13 | 93 | 6.160129 | 48.698788 | 6.178392 | 48.693237 |
| tid000001 | 2 | 13 | 107 | 6.162016 | 48.698792 | 6.178392 | 48.693237 |
| tid000002 | 4 | 12 | 74 | 6.152813 | 48.654213 | 6.195424 | 48.69561 |
| tid000002 | 4 | 12 | 81 | 6.152813 | 48.654213 | 6.16601 | 48.666126 |
| tid000002 | 4 | 12 | 88 | 6.152813 | 48.654213 | 6.195424 | 48.69561 |
| tid000003 | 2 | 8 | 65 | 6.177089 | 48.688473 | 6.165807 | 48.682377 |
| tid000003 | 2 | 8 | 72 | 6.177089 | 48.688473 | 6.16719 | 48.679199 |
| tid000003 | 2 | 8 | 79 | 6.177089 | 48.688473 | 6.165807 | 48.682377 |
| tid000003 | 2 | 8 | 93 | 6.177089 | 48.688473 | 6.165807 | 48.682377 |
| tid000003 | 2 | 8 | 114 | 6.177089 | 48.688473 | 6.165807 | 48.682377 |
| tid000003 | 2 | 8 | 121 | 6.177089 | 48.688473 | 6.165807 | 48.682377 |
| tid000003 | 2 | 8 | 128 | 6.177089 | 48.688473 | 6.165807 | 48.682377 |

For each length *L*, 2000 entities were collected from the database, unless there are less entities for a specific length *L*. For example, only 740 entities were collected for the length *L* = 10. Single-leg trips were considered in the evaluations. Thus, each trip was specified by four elements: the longitude and the latitude of the origin and the longitude and the latitude of the destination. Table 1 shows a sample fragment of the results aquired from the dataset). The e-cards in the dataset also identified users and included time stamp information, which encodes the day of the week, the hour of the day, and the day of the year. An entity *<u,t>* thus includes all records sharing the same ticket id, weekday, and hour of the day, with different trips being indexed by the day of the year as trip histories. Table 1 also demonstrates single leg trips with GPS coordinates of the origin and destination stop, where *v = Ø*.

Each dataset was split into train and validation sets. Moreover, an additional trip (*test* trip) was available for each entity, which was used as the ground truth (i.e. $T_{ut}^{tst}$) in order to investigate the accuracy of the estimation/prediction.

Evaluation criteria.

The ground-truth and the predicted trips were compared and the mean squared error was computed using the equation:

$$\hat{err} = \frac{1}{|\{<u,t>\}|} \sum_{<u,t>} seuc(r_{ut}, T_{ut}^{tst}) , \qquad (5)$$

where $|\{<u,t>\}|$ shows the number of test cases (entities).

Results.

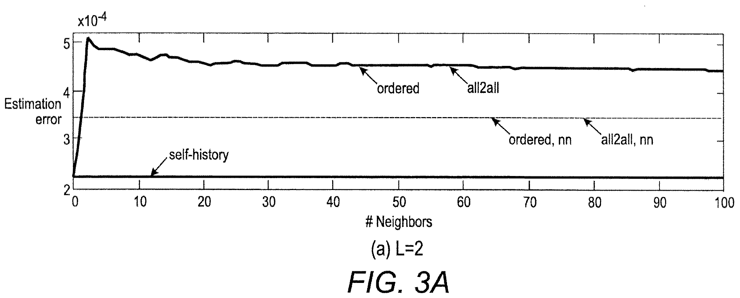

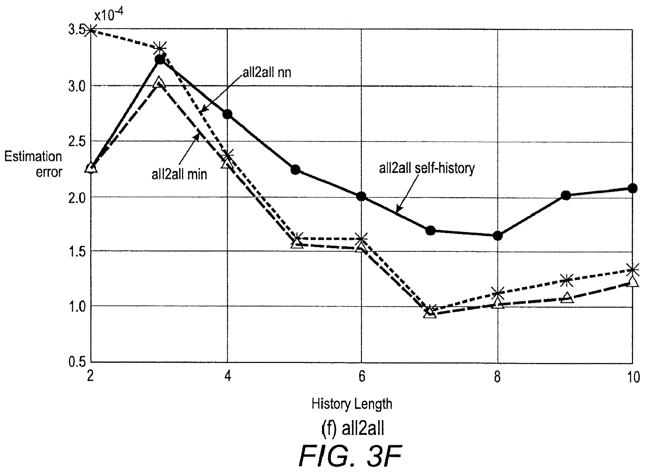

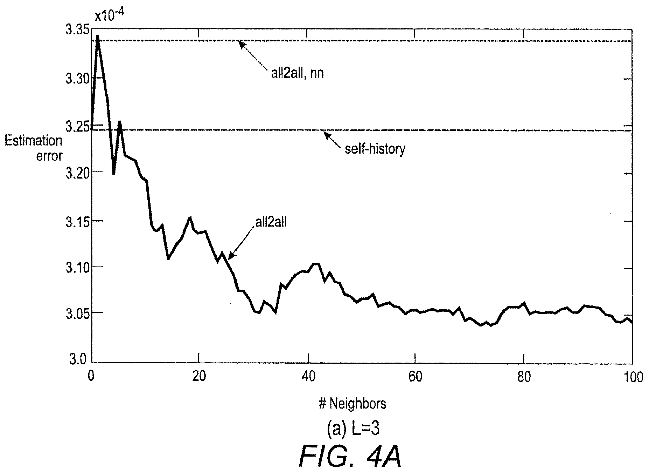

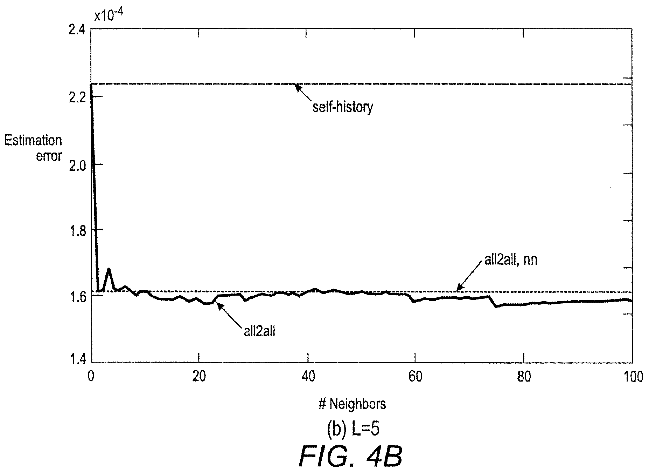

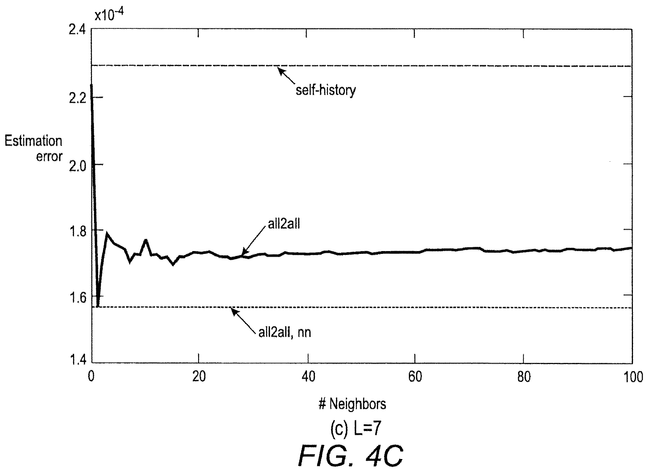

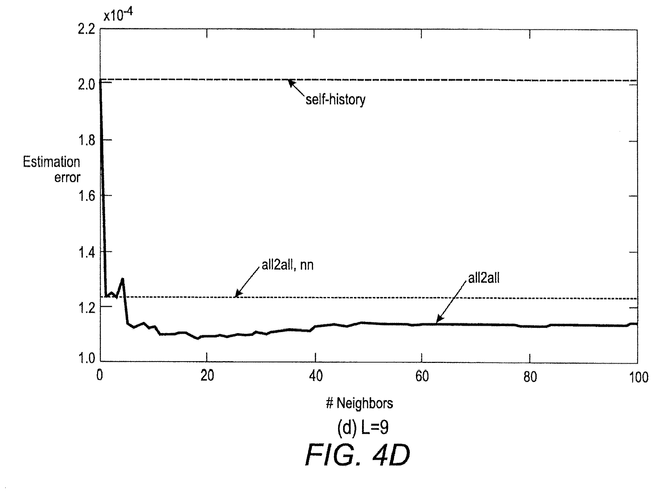

Figures *3A-G* and 4*A-D* illustrate the estimation error respectively for computing the neighbors when *L* is an even number and an odd number, respecively, as a function of number of neighbors. The neighbors were sorted according to their usefulness on the validation set. Different number of neighbors were investigated for each user. FIGURES *3A-F* demonstrates that where the number *no. of neighbors*= 0, only the entity's self history was used for computing a representative trip and prediction. This setting thus consistutes a baseline. Another baseline used in the evaluation was the single nearest neighbor with self history. In FIGURES 3F-G, the prediciton error was plotted using helf-history only, nearest-neighbor, and the optimal set of neighbors, for the two options of the distance function.

A first observation made by the examples is that, except for when the length *L* = 2, the disclosed approach consistently reduced the estimation error. Where the length *L* = 2, there is only one trip for each of the training and validation sets. Thus, due to noise and sparsity, informative and reliable neighbors could not be identified. However, once the number of trips were increased for train and validation sets, e.g. *L* = 3,4,5,6,7,8,9,10, the disclosed method yielded closer neighbors and more accurate representative trips among them, which thereby reduced the estimation error by 15% to 40%.

A second observation made by the examples is that as the number of trips *L* in the history increased, the computation for determining the neighbors improved and a more reliable representative trip was obtained. Thus, a larger dataset of trips *L* yields better performance in trip prediction.

A third observation made by the examples is that the results were very much consistent between *all2all* and *ordered* embodiments, which also indicates a lack of any significant temporal trip behavior. However, one advantage of the *all2all* embodiment is that it can be employed even when there are entities with varying number of trips.

EXAMPLE 2:

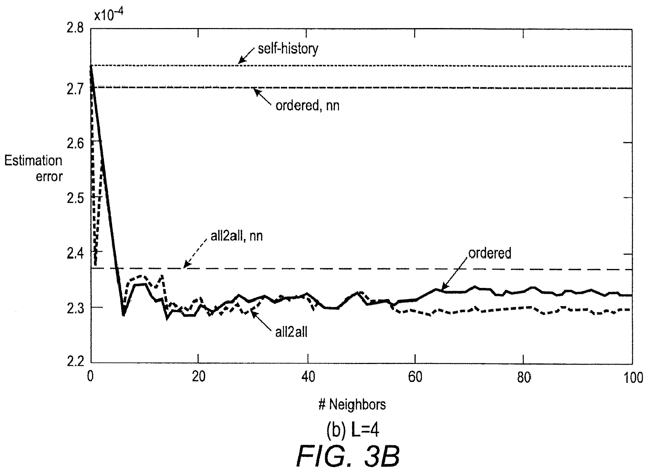

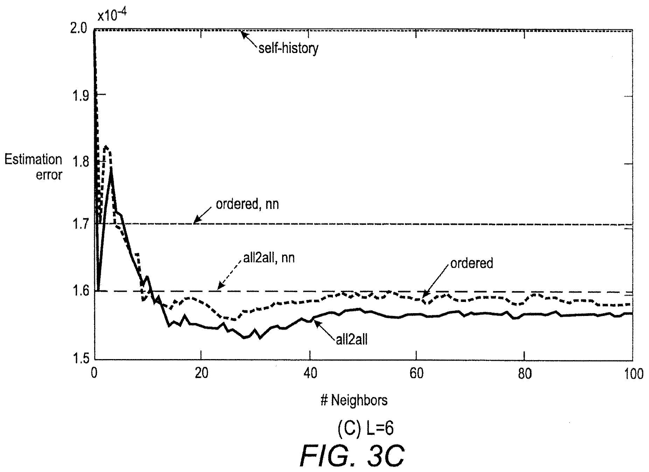

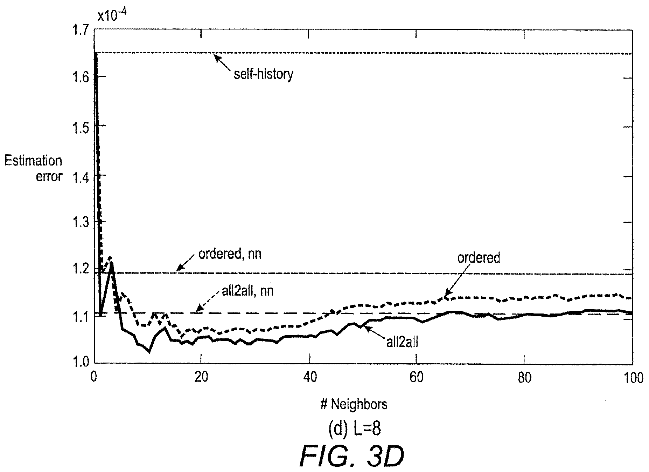

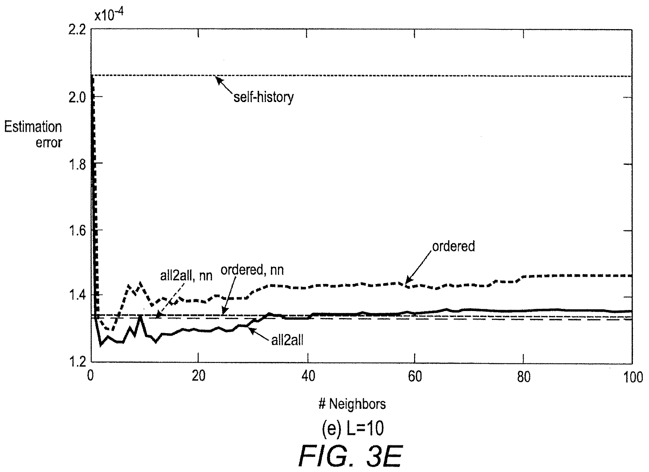

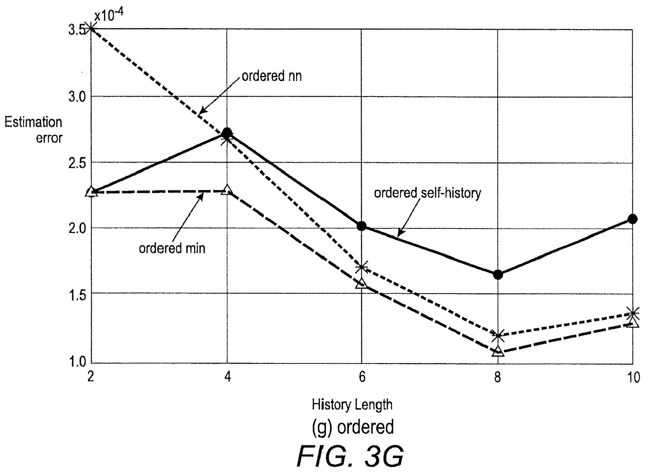

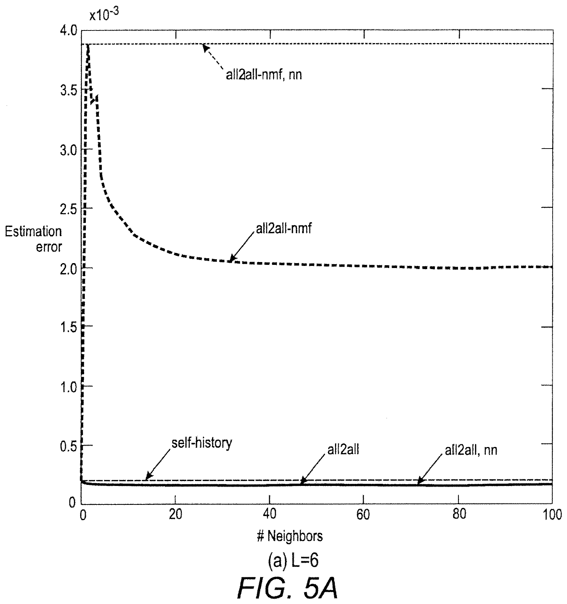

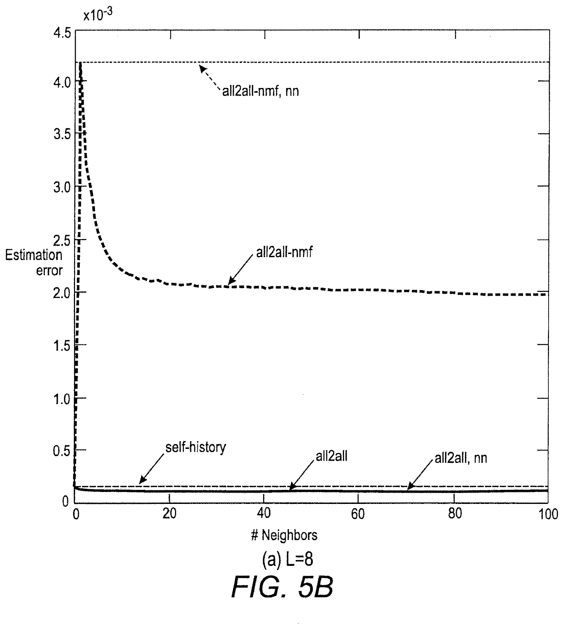

Experiments were performed using the disclosed approach to determine how the use of matrix factorization methods affects the prediction accuracy. In particular, a non-negative matrix factorization was performed on the feature matrices in order to transform the original features into another type of features, which might be more suitable. This technique is common in recommendations and collaborative filtering. The evaluations were repeated for a different number of hidden components and the best results were selected. In the evaluations, the optimal number of components is 4. These results are shown in Figure 3*C-D* (where *L* =6,8). Consistent results were also observed for the other values of *L* = 2,4,10 in FIGURES 3*A*, *B, E*. FIGURES 5*A-B* shows plots of the estimation error computed for an illustrative dataset of entities with and without non-negative matrix factorization, and with a trip history length *L* = 6.

A significant increase in the prediction error is observed for transforming the original features into the new features. This observation implies that the original features are sufficient and informative enough to be used for the purpose of learning and prediction. Such results may be observed because the original features are orthogonal (non-redundant) and sufficiently describe the origin and destination points.

EXAMPLE 3:

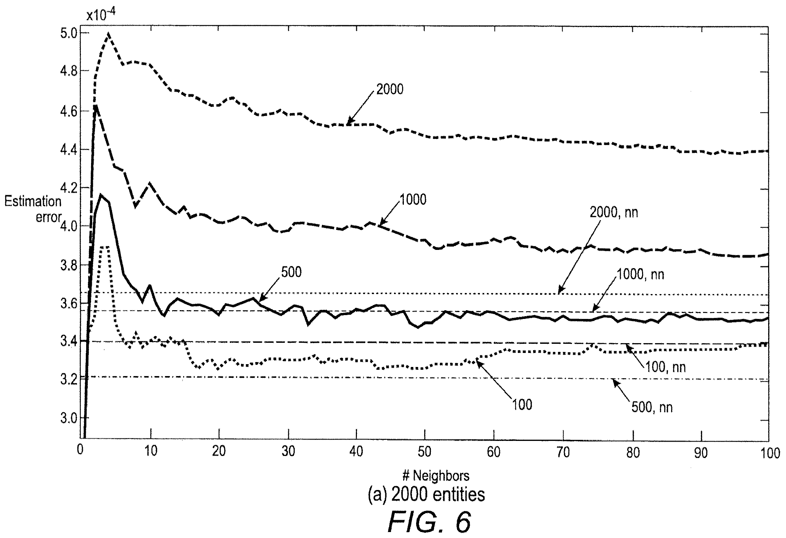

Experiments were performed using the disclosed method to determine whether augmenting short histories with long histories can predict more accurate trips. In particular, a dataset of trips *L* = 2 is the only case where the disclosed method failed to improve prediction accuracy. Different numbers of entities (e.g. 100, 500, 1000 and 2000) were selected with the dataset of trips being *L* = 2 and were combined with 2000 entities whose dataset of trips was *L* = 8. FIGURE 6 illustrates the results. An estimation error was only computed for the entities having a dataset of trips being *L* = 2.

A first observation made by the experiment is that the impact of very short histories (i.e. *L* = 2) is very crucial, and is not substantiallly improved when augmented by very long histories. In this isolated scenario, using only the user's history may be a better choice.

A second observation made is that as the ratio of the number of long histories to the number of short histories increased, the quality (reliability) of neighbors increased and the estimation error decreased. This behavior was particularly observed when the number of entities changes from 2000 to 1000, 500, and finally to 100.

EXAMPLE 4:

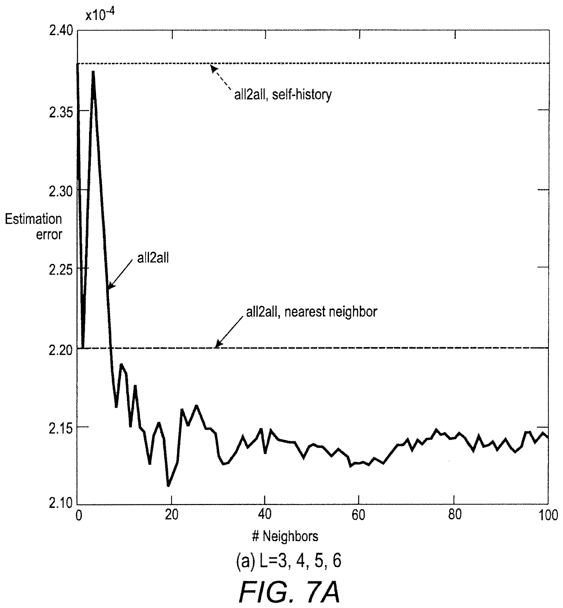

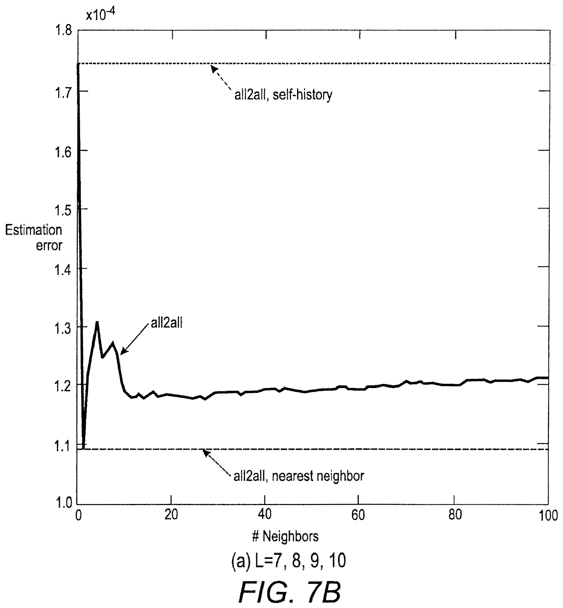

Experiments were performed on the disclosed method to consider combinations of entities with different numbers of trips, i.e. with varying lengths *L*. In the first case, shown in FIGURE 7*A*, entities were combined with lengths being *L* = 3,4,5,6 trips. The dataset contained 500 entities from each category. In the second case, shown in FIGURE 7*B*, lengths *L* = 7,8,9,10 were considered 500 entities were collected from each category. For this setting, the *all2all* embodiment was employed for computing appropriate neighbors, since the entities have different number of trips.

A first observation shown in FIGURES 7*A-B* is that, for both cases, the disclosed method helped to compute appropriate neighbors and reduced the estimation error.

For the second case shown in FIGURE 7*B*, the observed estimation error was smaller (and smoother) than the first case. The reason is because the trip histories are longer for the second case, thus the representative trip can be computed in a more robust way.

In specific, the performed experiments show that the disclosed approach can improve the performance of existing trip prediction algorithms via a similarity-based data refinement process.

**Claims**

1. A method for predicting trips specific to a given user, the method comprising:

   acquiring a first dataset of trip histories taken in a given transportation network, wherein each trip history is specified by origin and destination coordinates;
   dividing a trip history of a given user at a specific time into a user training dataset and a user validation dataset;
   generating training datasets each associated with candidate neighboring entities;
   identifying useful neighbors from the training and validation datasets;
   combining the user trip history and the trip history of each useful neighbor;
   applying a similarity function to the combined dataset, wherein a sum of similarities between a given trip and all other trips in the combined dataset is computed;
   associating a trip having the highest similarity with a prediction for a future trip; and
   outputting the prediction to an associated user device.

2. The method of claim 1 further comprising:

   before associating the trip having the highest similarity with the prediction, weighting the summed similarities of the each trip by a measure corresponding to a frequency of the trip appearing in the combined dataset; and
   associating the trip having the highest weighted similarity with the prediction.

3. The method of claim 1 or claim 2, wherein the identifying the useful neighbors includes:

   applying a distance function to corresponding entities in the user validation dataset and the user training dataset to compute a first distance;
   applying a distance function to corresponding entities in the user validation dataset and the neighbor training dataset to generate a second distance;
   associating a candidate neighboring user as being a useful neighbor in response to the second distance being not greater than the first distance.

4. The method of any of the preceding claims, wherein a number of trips in each of the training datasets and the user validation set are equal.

5. The method of claim 1, wherein the identifying the useful neighbors includes:

   applying a distance function to corresponding entities in the user validation dataset and the user training dataset to compute a first distance;
   applying a distance function to every combination of entities in the user validation dataset and the neighbor training dataset to generate a second distance;
   associating a candidate neighboring user as being a useful neighbor in response to the second distance being not greater than the first distance.

6. The method of any of the preceding claims, wherein the distance function is defined as a function of a pairwise-squared Euclidean distances between trips.

7. The method of any of the preceding claims further comprising:

   before dividing the trip history of the given user into the user training dataset and the user validation dataset, generating trip entities using the trip history, wherein each entity is associated with a trip taken at a predetermined time slot.

8. A system for predicting trips specific to a given user, the system comprising:

a computer programed to perform a method for a classification of candidate object associations and including the operations of:

acquiring a first dataset of trip histories taken in a given transportation network, wherein each trip history is specified by origin and destination coordinates;
dividing a trip history of a given user into a user training dataset and a user validation dataset;
generating training datasets each associated with candidate neighboring users;
identifying useful neighbors from the training and validation datasets;
combining the user trip history and the trip history of each useful neighbor;
applying a similarity function to the combined dataset, wherein a sum of weighted similarities between a given trip and all other trips in the combined dataset is computed;
associating a trip having the highest similarity with a prediction for a future trip; and
outputting the prediction to an associated user device.

9. The system of claim 8, wherein the computer is further programmed to:

before associating the trip having the highest similarity with the prediction, weight the summed similarities of the each trip by a measure corresponding to a frequency of the trip appearing in the combined dataset; and
associate the trip having the highest weighted similarity with the prediction.

10. The system of claim 8 or claim 9, wherein the identifying the useful neighbors includes:

applying a distance function to corresponding entities in the user validation dataset and a user training dataset to compute a first distance;
applying a distance function to corresponding entities in the user validation dataset and the neighbor training dataset to generate a second distance;
associating a candidate neighboring user as being a useful neighbor in response to the second distance being not greater than the first distance.

11. The system of claim 8 or claim 9, wherein the identifying the useful neighbors includes:

applying a distance function to every combination of the user validation dataset and a user training dataset to compute a first distance;
applying a distance function to every combination of the user validation dataset and the neighbor training dataset to generate a second distance;
associating a candidate neighboring user as being a useful neighbor in response to the second distance being not greater than the first distance wherein the distance function is applied to every combination of entities in the user validation dataset and the user training dataset to compute the first distance and to every combination of entities in the user validation dataset and the neighbor training dataset to compute the second distance.

12. The system of any of claims 8 to 11, wherein a number of trips in each of the training datasets and the user validation set are equal.

13. The system of any of claims 8 to 12, wherein the distance function is defined as a function of a pairwise-squared Euclidean distances between trips.

14. The system of any of claims 8 to 13 wherein the computer is further programmed to:

before dividing the trip history of the given user into the user training dataset and the user validation dataset, generate trip entities using the trip history, wherein each entry is associated with a trip taken at a predetermined time slot.

FIG. 1

START ─ S202

ACQUIRE DATASET OF TRIP HISTORIES
FOR DIFFERENT ENTITIES ─ S204

GENERATE TRIP ENTITIES EACH ASSOCIATED WITH AS
USER AND TIMEPOINT ─ S206

SPLIT TRIP HISTORY OF EACH ENTITY INTO A
TRAINING AND VALIDATION SET ─ S208

S212
(
IDENTIFY
USEFUL
NEIGHBORS

S214
APPLY DISTANCE FUNCTION TO ENTITY'S
VALIDATION SET AND ENTITY'S
TRAINING SET TO COMPUTE DISTANCE
BETWEEN ENTITIES

S220
APPLY DISTANCE FUNCTION TO ENTITY'S
VALIDATION AND NEIGHBOR'S TRAINING
SETS TO COMPUTE DISTANCE BETWEEN
ENTITIES

S216
COMBINE SUM OF DISTANCES BETWEEN
DIFFERENT VECTOR COMBINATIONS
IN S214

S222
COMBINE SUM OF DISTANCES BETWEEN
DIFFERENT VECTOR COMBINATIONS IN
S220

IS
DISTANCE
BETWEEN USER'S
VALIDATION AND NEIGHBOR'S
TRAINING SETS SMALLER THAN OR EQUAL
TO DISTANCE BETWEEN USER'S
VALIDATION AND USER'S
TRAINING
SET? ─ S226

YES          NO

S228
USFUL

S230
DISCARD
NEIGHBOR

A

FIG. 2A

(A)

S232

COMBINE USER'S AND USEFUL NEIGHBORS' TRIP ENTITIES
INTO COMBINED DATASET

S236

COMPUTE DISTANCE BETWEEN EACH TRIP COMBINATION
IN WHOLE DATASET AND CONVERT IT TO A
SIMILARITY MEASURE

S234

DETERMINE REPRESENTATIVE TRIP
AMONG TRIPS OF AN ENTITY AND
ITS USEFUL NEIGHBORS, THAT
HAS STRONGEST CONNECTION TO
ALL THEIR TRIPS WITHIN THE SET

S238

WEIGHT COMPUTED SIMILARITY BETWEEN TWO TRIPS BY
MEASURE THAT CORRESPONDS TO THE FREQUENCY

S240

ASSOCIATE TRIP WITH MAXIMAL WEIGHTED SIMILARITY
AS REPRESENTATIVE TRIP

S242

PROVIDE USER DEVICE WITH PREDICTION OUTPUT
ASSOCIATING REPRESENTATIVE TRIP AS FUTURE TRIP
OF USER

END —S244

# FIG. 2B

(a) L=2

*FIG. 3A*

(b) L=4
*FIG. 3B*

*FIG. 3C*

(C) L=6

(d) L=8

FIG. 3D

# FIG. 3E

(e) L=10

(f) all2all

*FIG. 3F*

(g) ordered

*FIG. 3G*

(a) L=3

*FIG. 4A*

(b) L=5

*FIG. 4B*

(c) L=7

*FIG. 4C*

EP 3 270 334 A1

(d) L=9

*FIG. 4D*

(a) L=6

*FIG. 5A*

(a) L=8

FIG. 5B

# Neighbors
(a) 2000 entities

*FIG. 6*

(a) L=3, 4, 5, 6

*FIG. 7A*

(a) L=7, 8, 9, 10

*FIG. 7B*

Example trips

FIG. 8

FIG. 9

*FIG.10*

Europäisches
Patentamt

European
Patent Office

Office européen
des brevets

# EUROPEAN SEARCH REPORT

Application Number

EP 17 18 0046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 372 625 A1 (SAP AG [DE]) 5 October 2011 (2011-10-05) * paragraph [0157] - paragraph [0170]; figures 1-5 * | 1-14 | INV. G06Q10/04 G06Q10/06 G06Q30/02 G06Q10/02 |

TECHNICAL FIELDS
SEARCHED (IPC)

G06Q

The present search report has been drawn up for all claims

| Place of search | Date of completion of the search | Examiner |
|---|---|---|
| Munich | 23 November 2017 | Pastore, Edoardo |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

 

& : member of the same patent family, corresponding
 document

EPO FORM 1503 03.82 (P04C01)

EP 3 270 334 A1

## ANNEX TO THE EUROPEAN SEARCH REPORT
## ON EUROPEAN PATENT APPLICATION NO.

EP 17 18 0046

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2017

| Patent document cited in search report | Publication date | Patent family member(s) | Publication date |
|---|---|---|---|
| EP 2372625 A1 | 05-10-2011 | EP 2372625 A1<br>US 2011246404 A1 | 05-10-2011<br>06-10-2011 |

For more details about this annex : see Official Journal of the European Patent Office, No. 12/82